# EUROPEAN PATENT SPECIFICATION

(11) **EP 4 354 828 B1**
(45) Date of publication and mention of the grant of the patent: **29.04.2026**
(21) Application number: 22200630.6
(22) Date of filing: 10.10.2022
(51) Int. Cl.: H04L 61/4541, H04L 67/51, H04W 76/10

(54) **V-EASDF IN HOME ROUTED ROAMING**
V-EASDF BEIM HEIMGEROUTETEN ROAMING
V-EASDF DANS L'ITINÉRANCE À ACHEMINEMENT DOMESTIQUE

(43) Date of publication of application: 17.04.2024
(73) Proprietor: Nokia Solutions and Networks Oy, 02610 Espoo (FI)
(72) Inventor: Hoffmann, Klaus, 80995 Munich (DE); Thiebaut, Laurent, 92160 Antony (FR); Singh, Shubhranshu, 64342 Seeheim (DE)
(74) Representative: TBK

(56) References cited:
- WO-A1-2022/206260
- "3rd Generation Partnership Project; Technical Specification Group Services and System Aspects; Study on Enhanced architecture for enabling Edge Applications; (Release 18)", no. V1.2.0, 12 September 2022 (2022-09-12), pages 1 - 177, XP052210749, Retrieved from the Internet <URL:https://ftp.3gpp.org/Specs/archive/23_series/23.700-98/23700-98-120.zip 23700-98-120-cl.docx> [retrieved on 20220912]
- HUAWEI ET AL: "EASDF discovery and selection", vol. SA WG2, no. e-meeting; 20210412 - 20210416, 6 April 2021 (2021-04-06), XP051993942, Retrieved from the Internet <URL:https://ftp.3gpp.org/tsg_sa/WG2_Arch/TSGS2_144E_Electronic/Docs/S2-2102567.zip S2-2102567 EASDF discovery_v1.1.docx> [retrieved on 20210406]
- "3rd Generation Partnership Project; Technical Specification Group Services and System Aspects; 5G System Enhancements for Edge Computing; Phase 2 (Release 18)", no. V1.0.0, 4 September 2022 (2022-09-04), pages 1 - 190, XP052211377, Retrieved from the Internet <URL:https://ftp.3gpp.org/Specs/archive/23_series/23.700-48/23700-48-100.zip 23700-48-100.docx> [retrieved on 20220904]
- WENLIANG XU ET AL: "Solve IP address overlapping in sol#23", vol. 3GPP SA 6, no. Online; 20220822 - 20220831, 16 August 2022 (2022-08-16), XP052186893, Retrieved from the Internet <URL:https://www.3gpp.org/ftp/tsg_sa/WG6_MissionCritical/TSGS6_050-e/Docs/S6-222099.zip S6-222099 FS_eEDGEAPP solve IP addr overlapping in sol#23 23700-98 v0.doc> [retrieved on 20220816]
- SHAOWEN ZHENG ET AL: "FS_eEDGE_A new solution for KI16", vol. 3GPP SA 6, no. Online; 20220822 - 20220831, 16 August 2022 (2022-08-16), XP052186979, Retrieved from the Internet <URL:https://www.3gpp.org/ftp/tsg_sa/WG6_MissionCritical/TSGS6_050-e/Docs/S6-222186.zip S6-222186-FS_eEDGE_a new solution for KI16.docx> [retrieved on 20220816]

## Description

### Field of the Invention

The present invention relates to an apparatus, a method and a computer program product for handling a roaming scenario in edge computing.

### Related background Art

The following meanings for the abbreviations used in this specification apply:
- AF: Application Function
- DN: Data Network
- DNN: Data Network Name
- DNS: Domain Name System
- EAS: Edge Application Server
- EASDF: Edge Application Server Discovery Function
- ECS: Edge Configuration Server
- EDC: Edge DNS Client
- FAR: Forwarding Action Rules
- FTEID: Fully Qualified Tunnel Endpoint ID
- GPRS: General Packet Radio Service
- GTP: GPRS Tunnelling Protocol
- H-PCF: Home Policy Control Function
- H-PCRF: Home Policy and Charging Rules Function
- H-PLMN: Home Public Land Network
- H-SMF: Home Session Management Function
- HR: Home Routed
- ID: Identifier
- LBO: Local Break Out
- NF: Network Function
- NPAT: Network Port and Address Translation
- NPN: Non-Public Network
- NRF: Network Repository Function
- OAM: Operation and Maintenance
- PCF: Policy Control Function
- PCO: Protocol Configuration Options
- PCRF: Policy and Charging Rules Function
- PDN: Packet Data Network
- PDU: Protocol Data Unit
- PGW-C: PDN Gateway Control plane function
- PGW-U: PDN Gateway User plane function
- PLMN: Public Land Mobile Network
- PSA: PDU Session Anchor
- RAN: Radio Access Network
- SGW-C: Serving Gateway Control plane function
- SGW-U: Serving Gateway User plane function
- SNPN: Standalone Non-Public Network
- S-NSSAI: Single Network Slice Selection Assistance Information
- SMF: Session Management Function
- UE: User Equipment
- UL: Uplink
- UL CL: Uplink Classifier
- UPF: User Plane Function
- V-EASDF: Visited EASDF
- V-NRF: Visited NRF
- V-PCF: Visited Policy Control Function
- V-PCRF: Visited Policy and Charging Rules Function
- V-PLMN: Visited PLMN
- V-PSA: Visited PDU Session Anchor
- V-SMF: Visited Session Management Function
- V-ULCL: Visited Uplink Classifier
- V-UPF: Visited User Plane Function

Document "3rd Generation Partnership Project; Technical Specification Group Services and System Aspects; Study on Enhanced architecture for enabling Edge Applications; (Release 18)", 3GPP STANDARD; TECHNICAL REPORT; 3GPP TR 23.700-98, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1 .2.0 12 September 2022 (2022-09-12), discloses a study on enhanced architecture for enabling edge applications over 3GPP networks.

Document HUAWEI ET AL: "EASDF discovery and selection", 3GPP DRAFT; S2-2102567, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210412 - 20210416 6 April 2021, discloses procedures for EASDF discovery and selection.

Document "3rd Generation Partnership Project; Technical Specification Group Services and System Aspects; 5G System Enhancements for Edge Computing; Phase 2 (Release 18)", 3GPP STANDARD; TECHNICAL REPORT; 3GPP TR 23.700-48, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1 .0.0 4 September 2022, discloses enhancements for edge computing.

Document WENLIANG XU ET AL: "Solve IP address overlapping in SOI#23", 3GPP DRAFT; S6-222099; TYPE PCR; FS_EEDGEAPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. 3GPP SA 6, no. Online; 20220822 - 20220831 16 August 2022, discloses procedures for solving IP address overlapping issues.

Example embodiments, although not limited to this, relate to Edge Computing, in particular in roaming scenarios, see TR 23.700-48 (5G System Enhancements for Edge Computing; Phase 2 (Release 18)).

In particular, there might be a problem that in a roaming scenario in some network elements related to edge computing, several UEs might use the same private IP address, which is a problem.

### Summary of the Invention

Example embodiments address this situation aim to improve edge computing in a roaming scenario.

This object is solved by an edge application server discovery function, EASDF, as defined in claim 1, and alternatively by a method for use in an edge application server discovery function, EASDF, as defined in claim 2, and further alternatively by a computer program product as defined in claim 3.

### Brief Description of the Drawings

These and other objects, features, details and advantages will become more fully apparent from the following detailed description of example embodiments, which is to be taken in conjunction with the appended drawings, in which:
Fig. 1A shows a SMF 1 according to an unclaimed example,
Fig. 1B shows a procedure carried out by the SMF 1 according to the unclaimed example,
Fig. 2A shows a NRF 2 according to an unclaimed example,
Fig. 2B shows a procedure carried out by the NRF 2 according to the unclaimed example,
Fig. 3A shows an EASDF 3 according to an example embodiment,
Fig. 3B shows a procedure carried out by the EASDF 3 according to the example embodiment,
Fig. 4A shows an UPF 4 according to an unclaimed example,
Fig. 4B shows a procedure carried out by the UPF 4 according to the unclaimed example,

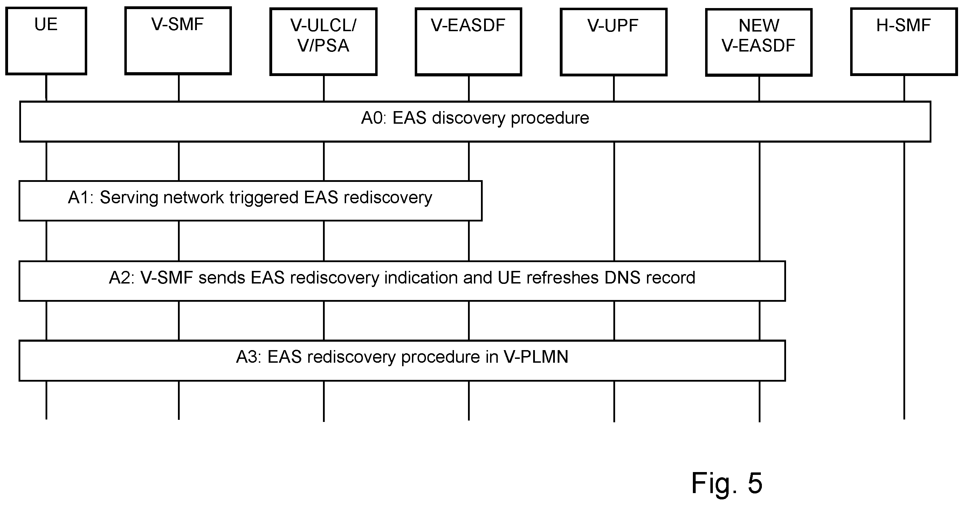

Fig. 5 (reflecting figure 6.3.2.2-1 of TS 23.700-48) shows an EAS rediscovery procedure accessing V-EHE in roaming scenario.

### Detailed Description of example embodiments

In the following, description will be made to example embodiments and unclaimed examples. It is to be understood, however, that the description is given by way of example only, and that the described example embodiments are by no means to be understood as limiting the present invention thereto.

Before describing example embodiment, in the following, problems of the prior art are discussed in some more detail.

As mentioned above, some example embodiments aim to overcome a problem which may occur in a roaming scenario in connection with edge computing.

The problem comes from the fact that an operator of a PLMN may have (quite certainly in fact) more subscribers (UEs) than it has public IP addresses assigned. Therefore, conventionally, the PLMNs use private (network-internal) IP addresses for network external communication that they allocate to each UE - and on the PLMN border (to the internet / a DNN) IP address translation is done via NPAT ("network address and port translation"). In the PLMN itself the fact that there are not sufficient IP addresses available for all UEs is anyway not a problem as network-internally switching is done using GTP-U / FTEID (i.e. at a layer below IP).

This NPAT works fine, even in case of roaming:
- For LBO ("local breakout") roaming: The (V-)PLMN allocates private IP addresses to all of "its" UEs (i.e. to the visiting UE just like to its home UEs). Traffic from a visiting UE to a DNN leaves from (only) the V-PLMN, so NPAT at the (V-)PLMN border works normally.
- For HR ("home-routed") roaming: The UE (even when currently roaming, i.e. visiting another PLMN) gets, for DNN traffic, its UE IP address allocated by the H-PLMN and all DNN traffic leaves via the H-PLMN. Again, NPAT works fine, this time at the H-PLMN border.

In other words, also with roaming NPAT works fine conventionally (either at the V-PLMN border or the H-PLMN border) because all traffic from one specific UE to a DNN leaves either at the V-PLMN or the H-PLMN.

A new problem now comes from the planned enhancements to Edge Computing (for roaming). These enhancements will enable a roaming (visiting) UE to perform normal HR roaming (i.e. all / most of its traffic to a DNN is sent normally from the H-PLMN), but to additionally use EC, which means that at least some of its traffic to a DNN is also sent using the shortest path to the "network edge" where the edge application is hosted, i.e. it is sent from the V-PLMN. So, in this scenario part of the UE's traffic is sent to a DNN via the H-PLMN and part of the UE's traffic is sent via the V-PLMN.

For HR roaming though, it is specified that the H-PLMN will allocate the (private) IP address to the UE. This could then lead to the following situation:
- Each H-PLMN of the UE allocates normally, as specified, a private IP address to the UE.
- When roaming in a V-PLMN and performing EC, the UE will use this IP address, e.g. for DNS requests to the EASDF.
- The same IP address however could (and most likely will) have been allocated to another UE in the V-PLMN by the V-PLMN (to one of "its own" UEs) or even by any other H-PLMN.

This may lead to a duplication of (private) IP addresses which will be a problem specifically for the EASDF that may receive the same request (i.e. with the same UE IP address) from in fact two or more different UEs.

Thus, in other words, there is a high risk of duplication of private UE IP address when considering UE IP address being allocated by V-PLMN and H-PLMN's. In particular, when DNS requests are offloaded to a V-EASDF, the UE context at EASDF is detected via UE IP address. There is high risk of duplication of private UE IP address, and thus conflicting EASDF DNSContext when considering UE IP addresses being allocated by V-PLMN and UE IP addresses being allocated by the different HPLMN the VPLMN is serving.

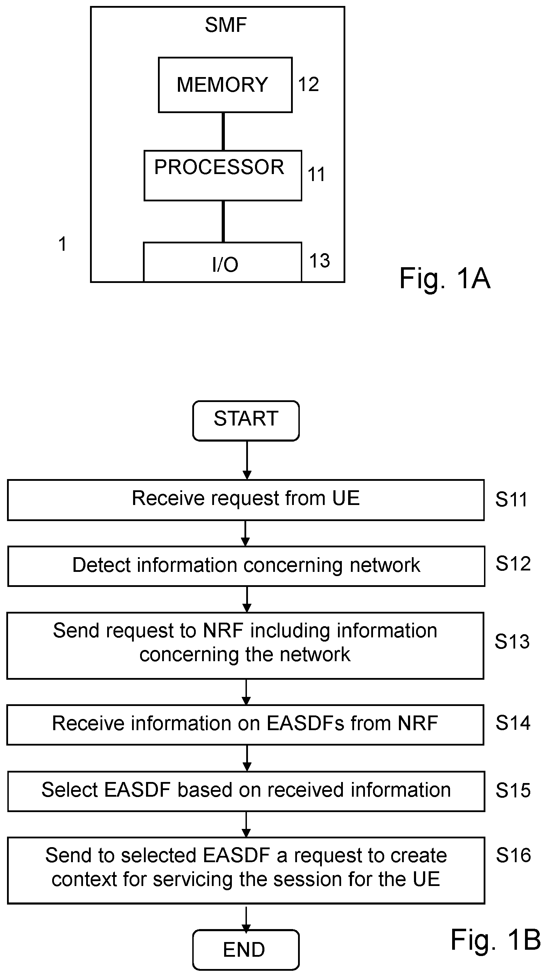

In the following, a general overview of some example embodiments an unclaimed examples is described by referring to Figs. 1A, 1B, 2A, 2B, 3A and 3B.

Fig. 1A shows an SMF 1 according to an unclaimed example. The SMF 1 is an example for an apparatus, which could be or be a part of a network control element, which may carry out a service management function, for example. A procedure carried out by the SMF 1 is illustrated in Fig. 1B. The SMF 1 shown in Fig. 1A comprises at least one processor 11 and at least one memory 12 including computer program code. The at least one processor 11, with the at least one memory 12 and the computer program code, is configured to cause the apparatus to perform: receiving a request from a mobile terminal (e.g., a UE), the request causing usage of edge computing related data processing and selection of an edge computing related network element (e.g., EASDF) (S11 in Fig. 1B), detecting information concerning a network domain of applicability of the edge computing related processing (S12 in Fig. 1B), sending, to a network information storage element (e.g., NRF), a request for providing information for selecting an edge computing related network element, the request including information for identifying the network domain of applicability of the edge computing related processing (S13 in Fig. 1B), receiving, from the network information storage element, information concerning at least one edge computing related network element associated with the network domain of applicability (S14 in Fig. 1B), selecting an edge computing related network element for the user equipment based on the received information (S15 in Fig. 1B), and sending, to the selected edge computing related network element, a request to create a context for serving the session for the user equipment (S16 in Fig. 1B).

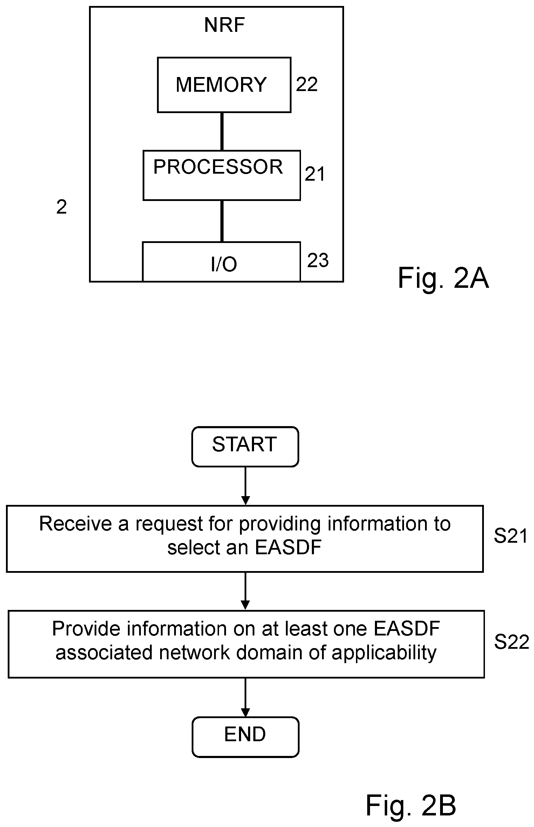

Fig. 2A shows a NRF 2 according to the present unclaimed example. The NRF 2 is an example for an apparatus, which could be or be a part of a network storage element such as a network repository function, for example. A procedure carried out by the NRF 2 is illustrated in Fig. 2B. The NRF 2 shown in Fig. 2A comprises at least one processor 21 and at least one memory 22 including computer program code. The at least one processor 21, with the at least one memory 22 and the computer program code, is configured to cause the apparatus to perform: receiving a request for providing information to select an edge computing related network element (e.g., EASDF), the request including information identifying a network domain of applicability (S21 in Fig. 2B), and providing information concerning at least one edge computing related network element associated with the network domain of applicability (S22 in Fig. 2B), wherein the apparatus maintains a database which includes in a profile of at least one edge computing related network elements at least one network domain of applicability.

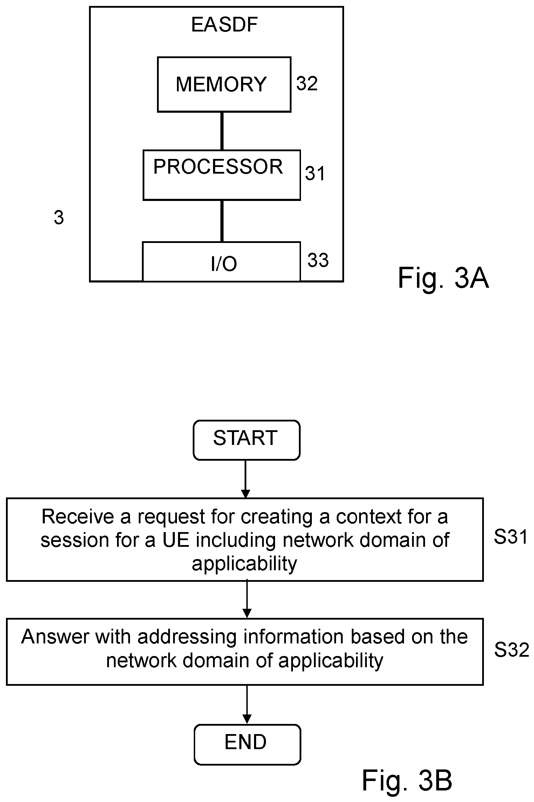

Fig. 3A shows an EASDF 3 as an example for an edge computing related network element, an edge application server discovery function, according to an embodiment. A procedure carried out by the EASDF 3 is shown in Fig. 3B. The EASDF 3 shown in Fig. 3A comprises at least one processor 31 and at least one memory 32 including computer program code. The at least one processor 31, with the at least one memory 32 and the computer program code, is configured to cause the apparatus to perform: receiving a request to create a context for serving a session for a user equipment, the request including information indicating a network domain of applicability of the user equipment (S31 in Fig. 3B), and answering to the request with addressing information depending on the network domain of applicability received in that request (S32 in Fig. 3B).

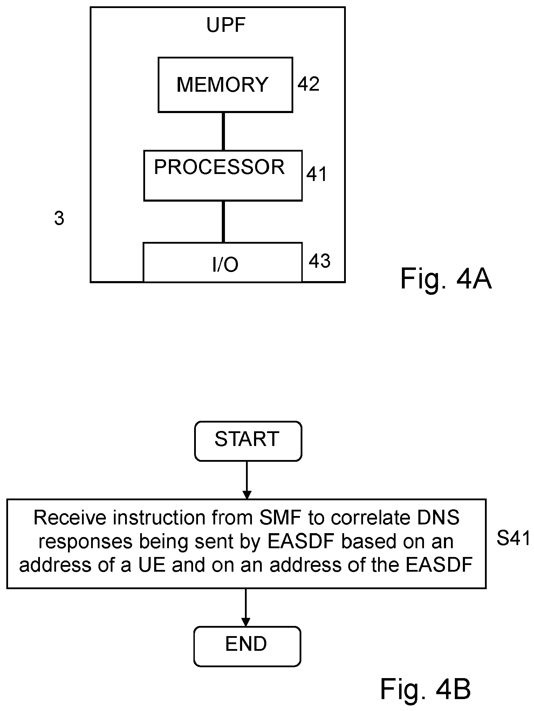

Fig. 4A shows an UPF 4 as an example for a network element carrying out a user plane function according to an unclaimed example. For example, the UPF 4 may be a UL CL UPF PSA. A procedure carried out by the UPF 4 is shown in Fig. 3B. The UPF 4 shown in Fig. 4A comprises at least one processor 41 and at least one memory 42 including computer program code. The at least one processor 41, with the at least one memory 42 and the computer program code, is configured to cause the apparatus to perform: receiving instruction from a session management function (e.g. SMF) to correlate domain name server (DNS) responses being sent by an edge computing related network element (e.g., EASDF) based on an address of a user equipment (UE) and on an address of the edge computing related network element (S41 in Fig. 4B).

The network domain of applicability mentioned above may include any kind of the network of the user equipment, such as a home network or a visited network of the user equipment, or may include a home public land mobile network (H-PLMN), a visited public land network (V-PLMN), a non-public network (NPN) or a standalone non-public network (SNPN) of the user equipment.

Thus, according to example embodiments, it can be ensured that in a roaming scenario, UEs from different PLMNs including visited PLMN with identical private IP addresses will be handled by different EASDFs or different partitions of an EASDF.

The apparatuses 1 to 3 shown in Figs. 1A, 2A, 3a and 4A may comprise more components than described above, and may further comprise I/O units 13, 23, 33 and 43, which are capable of transmitting to and receiving from other network elements.

In the following, the procedures described above are described in the following by referring to some further detailed examples.

In particular, according to some examples, DNSContext as created/updated in the EASDF (by SMF) additionally includes identifier e.g. a domain specific identifier (i.e. identifier for the UE IP address domain) or PLMN ID or an abstract roaming interface ID. This identifier, together with UE IP address is then used to differentiate/select/update particular DNSContext in the EASDF.

Some examples provide enhancements to the EASDF based EAS discovery procedure, where EASDF additionally uses UE IP address domain, if indicated in the DNSContext, to allocate different IP address in the received DNS query, and DNS Response. That is, the EASDF does not only consider the IP address of the UE on receipt of the DNS response from the V-EASDF, but also the Domain ID and EASDF IP address as received from the V-SMF in order to determine to which N3 GTP Tunnel the DNS response is to be mapped to (can already be instructed by SMF via FAR (Forwarding action rules) on N4 interface already.

According to some examples, the EASDF profile in the NRF is enhanced to indicate if EASDF supports implementation to allow roaming UE(s) DNSContext create/update.

Moreover, enhancements to the EASDF discovery procedure are provided. For example, the SMF includes "EASDF domain specific capability" indication in the discovery request to NRF. This Capability indication is to request EASDF that supports multiple PLMNs DNS Context create/update.

Thus, as described above, according to some examples, the EASDF selection process is enhanced by letting the selection process consider the PLMN ID of the involved H-PLMN/V-PLMN and/or an abstract roaming interface ID in order to select a dedicated EASDF for that particular H-PLMN/V-PLMN, and it is proposed to take advantage of separating domains on the EASDF based on the new domain (roaming) interface ID.

Therefore, either the EASDF shall register itself or via OAM or any other function like for instance the SMF on behalf of the EASDF shall register with the NRF that the particular EASDF is dedicated to one particular PLMN alone, or that the EASDF supports multiple IP domains e.g. for the purpose of DNSContext creation/update i.e. if the EASDF is able support multiple H-PLMNs and/or V-PLMN by partitioning the E-ASDF where for instance each partition may be dedicated to another H-PLMN or V-PLMN via the domain / (roaming) interface ID.

Based on these attributes the NRF shall be able to be queried via NRF discovery request in order to select the appropriated EASDF for the H-PLMN/V-PLMN in question.

For that to be accomplished in the case of home routed roaming the V-SMF shall check/evaluate the H-PLMN ID for instance during the PDU session establishment. Then the V-SMF shall query the NRF for the EASDF by adding the H-PLMN ID to the NRF query. However, also in the case of pure LBO (Local Break Out) in the V-PLMN the V-SMF shall query the NRF for V-EASDF by adding its own V-PLMN ID - as part of the generalized Domain ID - to the DNS query. This is to avoid that UE's with private IP being allocated by the V-PLMN for pure LBO may clash with private IP address allocated by H-PLMNs.

In response, the NRF shall provide the candidate list of EASDF which shall consist of those EASDF's, which support the H-PLMN/V-PLMN in question and/or those which support the partitioning based on the roaming interface ID as correlated with the H-PLMN/V-PLM at the SMF. The V-SMF selects the EASDF from the list of candidate EASDF received from the NRF.

If the V-SMF selects an EASDF which is only dedicated for the H-PLMN/V-PLMN in question the EASDF Service may not be needed to be changed/impacted.

However, if the V-SMF chooses to select a partitioned EASDF the V-SMF shall add either the H-PLMN ID/V-PLMN or the Roaming Interface ID mapped from the H-PLMN/V-PLMN in question as an additional input to the Neasdf_DNSContext service.

In that way only EASDFs which will handle the H-PLMN/V-PLMN in question will receive the EASDF context creation request, such that no clashes of IP addresses in the context on the EASDF Services can occur on the EASDF.

The solution is not limited to the case of PDU session establishment, but is also applicable to the handover case. For instance, based on the procedure 6.3.2.2 "EAS re-discovery procedure in roaming scenario" step 2 of the solution 3 in TR 23700-48 the V-SMF shall add the H-PLMN ID to the EASDF discovery request to be sent to the NRF and based on the figure 6.2.3.2.2-1 of TS 23548 the V-SMF (pure LBO) shall add the V-PLMN ID to the EASDF discovery request to be sent to the NRF.

SMF is just an example, SGW-C and PGW-C and V-PCRF, V-PCF and H-PCRF, H-PCF are further examples. V-EASDF is an example, UPF/ SGW-U and PGW-U are further examples.

In the following, some of the amended functions/elements are described:
The (V-)NRF accepts registration for EASDF with Domain ID possibly containing / pointing to PLMN ID and/or roaming interface ID or IP Domain or SNPN ID or NPN ID. Moreover, the (V-)NRF accepts discovers request for EASDF with attribute Domain ID PLMN ID and/or roaming interface ID and/or etc.

The V-SMF selects an EASDF based on the indication that it supports multiple IP domain based DNSContext creation/update e.g. as indicated by H-PLMN ID/V-PLMN ID or based on the new roaming interface ID associated with the H-PLMN by V-NRF/V-SMF to signal the Domain ID, EASDF IP address to the UL CL UPF PSA. This might be effected during PDU session establishment, after/during Handover, or after/during service request. Moreover, the V-SMF may register the EASDF on behalf of EASDF with the NRF.

The EASDF and EASDF interface is impacted by the introduction of Domain ID possibly containing / pointing to H-PLMN ID/V-PLMN ID and/or Roaming Interface ID or IP Domain or SNPN ID or NPN ID EASDF to register itself with the Domain ID possibly containing / pointing to PLMN ID and/or roaming interface ID and/or etc. Moreover, the EASDF indicates whether it can be partitioned.

The EASDF serves to select/allocate a dedicated IP address associated to the Domain ID being revealed to the UE as DNS server (in the PCO in the PDU session response. Context creation is not simply based on the UE IP address, but in addition based on the Domain ID and with correlation capability to correlate the DNS requests and responses. I. e. for each domain an own EASDF IP address is allocated/associated where the EASDF IP address is sent towards the UPF/UE and where for instance another EASDF IP address is sent towards DNS server such that on receipt of the DNS response from the DNS server, the EASDF will correlate the response with the context of the DNS request.

The OAM may register the EASDF on behalf of EASDF with the NRF.

Moreover, the UL CL UPF PSA does not only consider the IP address of the UE on receipt of the DNS response from the V_EASDF, but also the Domain ID and EASDF IP address as received from the V-SMF in order to determine to which N3 GTP Tunnel the DNS response is to be mapped to (can already be instructed by SMF via FAR (Forwarding action rules) on N4 interface already

Summarizing, according to some examples, it is proposed, in general words, to "make the EASDF(s) specific to one (or more) PLMNs". Either, an EASDF is only responsible for one single PLMN and this would be added to the respective NRF entry and then the EASDF is selected accordingly, or an EASDF may support more than one PLMN, but then an additional domain / PLMN identifier would be added to the signalling messages, so that the EADSF knows from which PLMN the request (UE) origins from and can react accordingly.

Hence, in order to avoid duplication of UE IP addresses (or, rather, to disambiguate where a request really comes from or how a request shall really be processed), according to some examples, two options are proposed:
- An EASDF is an EASDF dedicated for one single PLMN only. Then, each request can be handled by this EASDF conventionally. In order to ensure that the request gets to the correct EASDF, an additional indication is stored in the NRF explaining that an EASDF is only processing requests for e.g. a PLMN1. When an EADSF then needs to be discovered that can process a request for the PLMN1 this can accordingly be indicated during the discovery procedure.
- An EASDF may support processing requests from more than one PLMN. Then however, in the respective messages, it has to be indicated where a specific request comes from (e.g. PLMN1). Then, the EASDF can refer to the data relating to respective PLMN1. This EASDF might receive and store data independently for PLMN1, for PLMN2, for PLMN3, ....

Moreover, in the following the problem to be solved by some examples is again described by referring to a further example. That is, the problem is the following: Operators face the issue that the number of public IPv4 addresses they own may be much smaller than their number of subscribers (up to n*100Ms); hence they allocate private IPv4 addresses to users and carry out NAPT (network address and Port translation) on the traffic sent to the Internet.

Thus, it may happen that a user of first PLMN (PLMN1) gets on the same DNN and slice the same private IPv4 address let say 10.0.0.1 as a user of a second PLMN (PLMN2).

As long as we consider traffic on N3 and N9 (5G RAN- UPF and UPF-UPF interfaces) there is no problem as switching is done on GTP-U FTEID (at a layer below IP). Thus, issues with overlapping private IPv4 addresses have to be considered only on N6 DNN.

Let's consider 3 users: Alice and Bob from PLMN2 and Cheng from PLMN1; Alice is roaming in PLMN1's network, Bob and Cheng are not roaming.

Up to 3GPP Release 18 this didn't raise an issue:
In case of LBO roaming, Alice and Cheng have their address allocated by PLMN1 (so no IP address overlap between them) and their traffic handled by the N6 DNN at PLMN1.

In case of HR roaming, Alice and Bob have their address allocated by PLMN2 (so no IP address overlap between them) and their traffic handled by the N6 DNN at PLMN2.

The problem comes with R18 Edge Computing study for which it is desired that Alice may have part of her traffic sent on N6 at home (PLMN2 N6 DNN) but also part of her traffic (edge computing traffic) sent on the serving network (here PLMN1) N6 DNN including traffic sent to the EASDF (DNS proxy for the UE); we then consider DNS requests sent by UE(s) to the EASDF, (SA = source IP address of the UL DNS requests sent by UEs).

Thus, it may happen that PLMN2 has allocated 10.0.0.1 to Alice (HR roaming), while PLMN1 has allocated the same 10.0.0.1 to Cheng (non-roaming). This means that on the N6 DNN of PLMN1, to reach the EASDF in their serving network, here PLMN1, Cheng's UE issues DNS requests with SA = 10.0.0.1 and PLMN1, Alice's UE issues DNS requests with same SA = 10.0.0.1

The invention proposes to disambiguate that it is specified that the EASDF has to be identified by different own IP addresses (the DNS server address configured on Cheng's and Alice's UE are different so that the SA of their UL DNS requests are different).

As already described above, in the following, detailed impacts on the existing services functions are described.

Regardless of whether the V-SMF selects the V-EASDF during the PDU session establishment in step 4 as described in the Solution 5 of the ch. 6.5.2 of the TR 23700-48 or whether the V-SMF selects the V-EASDF after the PDU session establishment in step 2 as described in the ch. 6.2.3.2.2 of the TS 23548 and for handover/ UE mobility and etc based on solution 3 of the TR 23700-48, the following procedures can be carried out. Thus, in the following, an example is described based on ch. 6.3.2.2 of TS 23.700-48 V1.0.0 (2022-09), wherein an EAS rediscovery procedure in a roaming scenario is illustrated.

The support for EAS rediscovery indication procedure enables the UE to refresh stale EAS information stored locally so that the UE can trigger EAS discovery procedure to discover new EAS information as described in clause 6.2.3.3 of TS 23.548 . The corresponding EAS rediscovery procedure is shown in Fig. 4 (reflecting figure 6.3.2.2-1 of TS 23.700-48).

In A0, the procedure in clause 6.3.2.1 executes with following difference to apply to EAS rediscovery: In step 1, the UE may indicate its support for refreshing stale EAS information stored locally corresponding to the impact field per the EAS rediscovery indication from network to the V-SMF during the HR PDU Session Establishment procedure. It is noted that, if the UE indicates such support, V-SMF may store this indication in the PDU Session context.

In A1, due to the UE mobility the V-SMF triggers V-PSA insertion, change or removal for the PDU Session. The insertion, change or removal of V-PSA triggers EAS rediscovery. It is noted that this solution does not cover EAS rediscovery scenario triggered by AF.

In A2, V-SMF sends PDU Session Modification Command (EAS rediscovery indication, [impact field]) to UE as described in step 2 of clause 6.2.3.3 of TS 23.548, with the following differences: V-SMF sends the impact field with the EAS rediscovery indication if the UE supports this indication.

According to some examples, if V-SMF chooses new V-EASDF for the PDU Session, in case of home routed roaming the V-SMF adds the H-PLMN ID and/or the roaming interface ID and in case of LBO roaming the V-SMF add its own V-PLMN ID to the NRF query for the selection of the EASDF and signals the H-PLMN ID and/or the roaming interface ID to the EASD and it does not provide the V-EASDF IP address to UE. V-SMF may configure V-UPF with the updated traffic routing rule (e.g. V-UPF routes DNS Queries for an FQDN (range) query to the new V-EASDF) and with corresponding EASDF IP replacement information (i.e. H-DNS server IP address and port number, new V-EASDF IP address and port number) as described in step 1 of clause 6.3.2.1. UE refreshes DNS record according to EAS rediscovery indication received from V-SMF.

In A3, the UE may trigger EAS discovery procedure to get new EAS information. This DNS query is sent to corresponding DNS server using IP address replacement in VPLMN.

Moreover, in TS 23.548, steps 3 and 4 of Figure 6.2.3.2.2-1 are modified as follows:
3. The SMF invokes Neasdf_DNSContext_Create Request (UE IP address, Domain ID, SUPI, DNN, notification endpoint, (DNS message handling rules)) to the selected EASDF. This step is performed before step 11 of PDU Session Establishment procedure in clause 4.3.2.2.1 of TS 23.502. In other words, Neasdf_DNSContext_Create Request is expanded by including the domain ID which identifies the home network (PLMN) of the UE.

The EASDF creates a DNS context for the PDU Session and stores the UE IP address, SUPI, the notification endpoint and potentially provided DNS message handling rule(s) into the context. The EASDF is provisioned with the DNS message handling rule(s), before the DNS Query message is received at the EASDF or as a consequence of the DNS Query reporting.

4. The EASDF invokes the service operation Neasdf_DNSContext_Create Response (EASDF IP address). After this step, the SMF includes the IP address of the EASDF received in Neasdf_DNSContext_Create Response as DNS server/resolver for the UE in the PDU Session Establishment Accept message as defined in step 11 of clause 4.3.2.2.1 of TS 23.502. The UE configures the EASDF as DNS server for that PDU Session.

If the UE requested to obtain UE IP address via DHCP and the SMF supports DHCP based IP address configuration, the SMF responds to the UE via DHCP response with the allocated UE IP address and/or the DNS server address containing the IP address of the EASDF.

In the following, amendments to the definition concerning EASD services within Network Function Services and Descriptions in chapters 7.1.1 and 7.1.2 of TS 23.548 are shown:
The following table illustrates the EASDF Services and Service Operations.

**Table 7.1.1-1: NF services provided by the EASDF**

| Service Name | Service Operations | Operation Semantics | Example Consumer(s) |
|---|---|---|---|
| Neasdf_DNSContext | Create | Request/ Response | SMF |
| | Update | Request/ Response | SMF |
| | Delete | Request/ Response | SMF |
| | Notify | Subscribe/ Notify | SMF |
| Neasdf_BaselineDNSPattern | Create | Request/ Response | SMF |
| | Update | Request/ Response | SMF |
| | Delete | Request/ Response | SMF |

### 7.1.2 Neasdf_DNSContext Service

### 7.1.2.1 General

Service description: This service enables the consumer to create, update, or delete DNS context in EASDF and to Subscribe to DNS message related reporting from EASDF.

DNS contexts in EASDF include rules on how EASDF is to handle DNS messages.

### 7.1.2.2 Neasdf_DNSContext_Create Service Operation

Service operation name: Neasdf_DNSContext_Create
Description: Create a DNS context in EASDF.
Input, Required: UE IP address, DNN, S-NSSAI, Notification Endpoint.
Input, Optional: DNS message handling rules, NEW: DOMAIN ID (e.g. H-PLMN-ID/V-PLMN-ID and/or Roaming Interface ID and/or etc).
DNS message detection and Actions(s) are specified in clause 6.2.3.2.2.
Output, Required: If successful, IP address of the EASDF, EASDF Context ID, Result Indication.
Output, Optional: None.

### 7.1.2.3 Neasdf_DNSContext_Update Service Operation

Service operation name: Neasdf_DNSContext_Update
Description: Update the DNS context in EASDF, or indicate EASDF to forward the DNS Response to UE.
Input, Required: EASDF Context ID, updated DNS message handling rules.
Input, Optional: NEW: DOMAIN ID (e.g. H-PLMN-ID/V-PLMN-ID and/or Roaming Interface ID and/or etc).
Output, Required: Result Indication.
Output, Optional: None.

### 7.1.2.4 Neasdf_DNSContext_Delete Service Operation

Service operation name: Neasdf_DNSContext_Delete
Description: Delete the DNS context in EASDF.
Input, Required: EASDF Context ID.
Input, Optional: None.
Output, Required: Result Indication.
Output, Optional: None.

In the following, amendments to chapter 5.2.7.2.2 Nnrf_NFManagement_NFRegister service operation of TS 23.502 are described:
Service Operation name: Nnrf_NFManagement_NFRegister.
Description: Registers the consumer NF in the NRF by providing the NF profile of the consumer NF to NRF and NRF marks the consumer NF available.
Inputs, Required: NF type, NF instance ID, FQDN or IP address of NF, Names of supported NF services (if applicable) and PLMN ID e.g. if NF needs to be discovered by other PLMNs/SNPNs.

It is noted that, for the UPF, the addressing information within the NF profile corresponds to the N4 interface.

Moreover, it is noted that , for the purpose of the Nnrf_NFManagement service, the SCP is treated by the NRF in the same way as NFs. Specifically, the SCP is designated with a specific NF type and NF instance ID. However, the SCP does not support services and related NF profile parameters do not apply (e.g. NF Set ID, NF service set ID, Endpoint Address(es) of instance(s) of supported service(s)), see clause 6.2.6.3 of TS 23.501.

### Inputs, Optional:

- If the consumer is EASDF, it may include S-NSSAI, DNN, N6 IP address of the PSA UPF, location as per NF profile, NEW: DOMAIN ID (e.g. H-PLMN-ID and/or V-PLMN ID and/or Roaming Interface ID and/or etc) and DNAI (if exists).

The above-described example embodiments are only examples and may be modified.

Names of network elements, protocols, and methods are based on current standards. In other versions or other technologies, the names of these network elements and/or protocols and/or methods may be different, as long as they provide a corresponding functionality.

In general, the example embodiments and unclaimed examples may be implemented by computer software stored in the memory (memory resources, memory circuitry) 12, 22, 32, 42 and executable by the processor (processing resources, processing circuitry) 11, 21, 31, 41 or by hardware, or by a combination of software and/or firmware and hardware.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The memory (memory resources, memory circuitry) 12, 22, 32, 42 may be of any type suitable to the local technical environment and may be implemented using any suitable data storage technology, such as semiconductor based memory devices, magnetic memory devices and systems, optical memory devices and systems, fixed memory and removable memory, and non-transitory computer-readable media. The processor (processing resources, processing circuitry) 11, 21, 31, 41 may be of any type suitable to the local technical environment, and may include one or more of general purpose computers, special purpose computers, microprocessors, digital signal processors (DSPs) and processors based on a multi core processor architecture, as non-limiting examples.

## Claims

1. An edge application server discovery function, EASDF (3) being a partitioned EASDF, comprising:
means for receiving, from a session management function, SMF (1), a request to create a domain name system, DNS, context for serving a session for a user equipment, UE, the request including information indicating a home public land mobile network, HPLMN, of the UE, the request being a Neasdf_DNSContext_Create Request,
means for creating the DNS context including the information indicating the HPLMN of the UE by selecting a dedicated IP address associated to the HPLMN being revealed to the UE as DNS server, and
means for answering to the request with the selected dedicated IP address depending on the HPLMN by using a Neasdf_DNSContext_Create Response.

2. A method, for use in an edge application server discovery function, EASDF (3), being a partitioned EASDF, the method comprising:
receiving, from a session management function, SMF (1), a request to create a domain name system, DNS, context for serving a session for a user equipment, UE, the request including information indicating a home public land mobile network, HPLMN, of the UE, the request being a Neasdf_DNSContext_Create Request,
creating the DNS context including the information indicating the HPLMN of the UE by selecting a dedicated IP address associated to the HPLMN being revealed to the UE as DNS server, and
answering to the request with the selected dedicated IP address depending on the HPLMN of the UE by using a Neasdf_DNSContext_Create Response.

3. A computer program product comprising code means for performing a method according to claim 2 when run on a processing means or module.

## Patentansprüche

1. Edge-Application-Server-Erkennungsfunktion, EASDF (3), die eine partitionierte EASDF ist, umfassend:
Mittel zum Empfangen, von einer Sitzungsverwaltungsfunktion, SMF (1), einer Anforderung zum Erstellen eines Domänennamensystem-, DNS-, Kontexts zum Bedienen einer Sitzung für ein Benutzergerät, UE, wobei die Anforderung Informationen enthält, die ein öffentliches Heimatmobilfunknetz, HPLMN, des UE angeben, wobei die Anforderung eine Neasdf_DNSContext_Create-Anforderung ist,
Mittel zum Erstellen des DNS-Kontexts, der die Informationen enthält, die das HPLMN des UE angeben, durch Auswählen einer dedizierten IP-Adresse, die dem HPLMN zugeordnet ist und dem UE als DNS-Server offenbart wird, und
Mittel zum Beantworten der Anforderung mit der ausgewählten dedizierten IP-Adresse in Abhängigkeit vom HPLMN unter Verwendung einer Neasdf_DNSContext_Create-Antwort.

2. Verfahren zur Verwendung in einer Edge-Application-Server-Erkennungsfunktion, EASDF (3), die eine partitionierte EASDF ist, wobei das Verfahren umfasst:
Empfangen, von einer Sitzungsverwaltungsfunktion, SMF (1), einer Anforderung zum Erstellen eines Domänennamensystem-, DNS-, Kontexts zum Bedienen einer Sitzung für ein Benutzergerät, UE, wobei die Anforderung Informationen enthält, die ein öffentliches Heimatmobilfunknetz, HPLMN, des UE angeben, wobei die Anforderung eine Neasdf_DNSContext_Create-Anforderung ist,
Erstellen des DNS-Kontexts, der die Informationen enthält, die das HPLMN des UE angeben, durch Auswählen einer dedizierten IP-Adresse, die dem HPLMN zugeordnet ist und dem UE als DNS-Server offenbart wird, und
Beantworten der Anforderung mit der ausgewählten dedizierten IP-Adresse in Abhängigkeit vom HPLMN des UE unter Verwendung einer Neasdf_DNSContext_Create-Antwort.

3. Computerprogrammprodukt, das Codemittel umfasst zum Ausführen eines Verfahrens nach Anspruch 2, wenn es auf einem Verarbeitungsmittel oder -modul ausgeführt wird.

## Revendications

1. Fonction de découverte de serveur d'application de périphérie, EASDF (3), étant une EASDF partitionnée, comprenant :
des moyens pour recevoir, d'une fonction de gestion de session, SMF (1), une requête de création d'un contexte de système de nom de domaine, DNS, pour desservir une session pour un équipement utilisateur, UE, la requête comprenant des informations indiquant un réseau mobile terrestre public nominal, HPLMN, de l'UE, la requête étant une requête Neasdf_DNSContext_Create,
des moyens pour créer le contexte DNS comprenant les informations indiquant le HPLMN de l'UE en sélectionnant une adresse IP dédiée associée au HPLMN étant révélée à l'UE en tant que serveur DNS, et
des moyens pour répondre à la requête avec l'adresse IP dédiée sélectionnée en fonction du HPLMN en utilisant une réponse Neasdf_DNSContext_Create.

2. Procédé, destiné à être utilisé dans une fonction de découverte de serveur d'application de périphérie, EASDF (3), étant une EASDF partitionnée, le procédé comprenant :
la réception, d'une fonction de gestion de session, SMF (1), d'une requête de création d'un contexte de système de nom de domaine, DNS, pour desservir une session pour un équipement utilisateur, UE, la requête comprenant des informations indiquant un réseau mobile terrestre public nominal, HPLMN, de l'UE, la requête étant une requête Neasdf_DNSContext_Create,
la création du contexte DNS comprenant les informations indiquant le HPLMN de l'UE en sélectionnant une adresse IP dédiée associée au HPLMN étant révélée à l'UE en tant que serveur DNS, et
la réponse à la requête avec l'adresse IP dédiée sélectionnée en fonction du HPLMN de l'UE en utilisant une réponse Neasdf_DNSContext _Create.

3. Produit de programme informatique comprenant des moyens de code pour exécuter un procédé selon la revendication 2 lorsqu'il est exécuté sur des moyens ou un module de traitement.
